# EUROPÄISCHE PATENTANMELDUNG

(11) **EP 0 705 682 A1**
(43) Veröffentlichungstag der Anmeldung: **10.04.1996**
(21) Anmeldenummer: 95114417.9
(22) Anmeldetag: 14.09.1995
(51) Int. Cl.: B29C 65/14, B29C 67/04

(54) **Verfahren zum thermischen Verbinden von Substraten aus Polymeren**

(30) Priorität: 07.10.1994 DE 4435887
(71) Anmelder: FRAUNHOFER-GESELLSCHAFT ZUR FÖRDERUNG DER ANGEWANDTEN FORSCHUNG E.V., D-80636 München (DE)
(72) Erfinder: Elsner, Peter, Dr., D-73271 Holzmaden (DE); Eyerer, Peter, Prof. Dr., D-76228 Karlsruhe (DE); Geissler, Adam, Dr., D-76689 Karlsdorf-Neuthard (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Zum Verbinden von wenigstens zwei Substraten aus thermoplastischen Polymeren wird vorgeschlagen, daß wenigstens ein Substrat zumindest an der Grenzfläche zum anderen Substrat wenigstens bereichsweise mit einem mikrowellenabsorbierenden Medium beschichtet wird und daß die Substrate unter Kontakt ihrer Grenzflächen in einem Mikrowellenfeld miteinander verschweißt werden.

## Beschreibung

Die Erfindung betrifft ein Verfahren zum thermischen Verbinden von wenigstens zwei Substraten aus Polymeren mittels Mikrowellenenergie unter Verwendung eines mikrowellenabsorbierenden Mediums.

In der Kunststofftechnik spielt das Verbinden von Substraten aus Kunststoffen eine bedeutende Rolle. Bei solchen Substraten kann es sich um dreidimensionale Formkörper, wie Gieß-, Spritzgießteile, Extrusionsteile, um räumlich geformte Vorprodukte, wie Haufwerke, z.B. Granulate und Pulver, um flächige Formteile, wie Platten, Folien, oder schließlich um faserige Formteile handeln. Soweit diese Substrate aus duroplastischen Polymeren bestehen, kommen vornehmlich das mechanische Fügen oder das Verkleben mit oder ohne Zugabe von Lösungsmittel in Frage, bei thermoplastischen Polymeren kommt das Schweißen bzw. Verschmelzen hinzu, da bei Temperaturen wenig oberhalb der Erweichungs- bzw. Schmelztemperatur nur der Molekülverband gelockert, aber nicht geschädigt wird und sich beim Abkühlen wieder rückbildet. Als Schweißverfahren kommen das rein thermische Schweißen oder das Hochfrequenzschweißen in Betracht. Diese Verfahren erfordern eine sehr exakte Temperaturführung, um den Molekülverband nicht nachhaltig zu schädigen. Sie führen auch nur bei bestimmten Werkstoffpaarungen von zueinander "affinen" Polymeren zu befriedigenden Ergebnissen. Auch ist es nicht oder nur mit großem Aufwand möglich, Substrate unterschiedlicher Form, z.B. räumliche und flächige, miteinander zu verschweißen. Bei größeren Volumina der miteinander zu verbindenden Substrate, z.B. eines granularen Haufwerks zu einem räumlichen Formkörper - in diesem Fall ist eher von Sintern als von Schweißen zu reden - ergibt sich eine lange Prozeßdauer, da das gesamte Volumen bei nur mäßiger Wärmezufuhr von außen auf Schmelztemperatur gebracht werden muß. Hier greift man deshalb meist zu Klebstoffen.

Es ist auch schon vorgeschlagen worden, Kunststoffe mittels Mikrowellenenergie zu verschweißen. So ist es bekannt (US 5 338 611), zwischen die Grenzflächen der Substrate eine mit mikrowellenabsorbierendem Ruß gefüllte Folie aus einem mit dem Kunststoff der Substrate mischbaren Polymer einzulegen und den Werkstoffverbund in ein Mikrowellenfeld einzubringen. Mit der Folie wird in die Verbindung ein zusätzlicher Kunststoff eingebracht, der für die Herstellung der Verbindung an sich nicht notwendig ist und somit einen unnötigen Kostenfaktor darstellt. Dies schlägt insbesondere zu Buch, wenn es sich um hochwertige Kunststoffe handelt. Hinzukommen die Kosten für die Herstellung dieser gefüllten Folie. Schließlich lassen sich mit dieser Methode bestimmte Substrate, z.B. Granulate oder andere partikelförmige Kunststoffe, überhaupt nicht miteinander verbinden.

Bei einem anderen bekannten Verfahren zur Herstellung von Verpackungen (DE 40 24 373) werden mikrowellenabsorbierende, oxidkeramische Partikel auf der den zu verbindenden Flächen abgekehrten Seite der Substrate angeordnet. In diesem Fall muß die an der Verbindungsstelle zu erzeugende Schmelzwärme durch das Substrat hindurchgeleitet werden mit dem zwangsläufigen Ergebnis, daß das Substrat in seiner gesamten Ausdehnung aufgeschmolzen wird. Abgesehen von der auf Folien oder dünnen Platten beschränkten Anwendungsmöglichkeit und dem unnötig hohen Energiebedarf, kommt es aufgrund des Durchschmelzens des Substrates zu unerwünschten Änderungen der technisch-physikalischen Eigenschaften. Bei Kunststoffen, die nach Überschreiten der Schmelztemperatur ihre Molekularstruktur irreversibel ändern, kann dieses Verfahren überhaupt nicht angewandt werden.

Der Erfindung liegt die Aufgabe zugrunde, das eingangs genannte Verfahren dahingehend weiterzuentwickeln, daß Substrate beliebiger Form aus Polymeren auf einfache und schnelle Weise miteinander verbunden werden können.

Diese Aufgabe wird erfindungsgemäß dadurch gelöst, daß wenigstens ein Substrat zumindest an der Grenzfläche zum anderen Substrat wenigstens bereichsweise mit dem mikrowellenabsorbierenden Medium unmittelbar beschichtet wird und daß die Substrate unter Kontakt dieser Grenzflächen in einem Mikrowellenfeld miteinander verschweißt werden.

Thermoplastische wie auch duroplastische Polymere sind gegen Mikrowellen im wesentlichen durchlässig. Es tritt allenfalls bei längerer Einwirkung eine molekulare Schädigung auf. Erfindungsgemäß wird eine Sensibilisierung durch oberflächiges Auftragen eines mikrowellenabsorbierenden Mediums vorzugsweise in flüssiger bis viskoser Form erreicht, in welchem die Mikrowellenenergie in Wärme umgesetzt und unmittelbar an die Grenzfläche des Substrates, das mit diesem Mittel beschichtet worden ist, sowie in die berührende Grenzfläche des anderen Substrates transportiert und führt dort zum Erweichen und Schmelzen der Polymere. Die Mikrowellenleistung wird in Abhängigkeit von den an der Verbindung beteiligten Polymeren so gesteuert, daß zumindest die gemeinsamen Grenzflächen Schmelztemperatur erreichen und miteinander verschweißen.

Das erfindungsgemäße Verfahren bietet vornehmlich folgende Vorteile:
- Da Polymere im wesentlichen mikrowellendurchlässig sind, können große Substrat-Volumina an ihren Kontaktflächen miteinander verbunden werden. Die Mikrowellenenergie wird gezielt nur an den Flächen, an denen sich das mikrowellenabsorbierende Medium befindet, in thermische Energie umgesetzt, so daß die Polymere auch nur dort in den Schmelz zustand übergeführt werden, ohne daß sie im übrigen in ihrer Molekularstruktur beeinträchtigt werden. Es sind auch keine weiteren Trägermedien notwendig, die zwischen die Grenzflächen eingelegt werden müssen.
- Selbst bei großen Volumina ist die "Schweißzeit" extrem kurz, da die für den Schweißvorgang notwendige thermische Energie nicht transportiert werden muß, sondern am gewünschten Ort und nur dort unmittelbar erzeugt wird.
- Da ein Verschweißen nur dort stattfindet, wo sich das mikrowellenabsorbierende Medium befindet, kann die Schweißverbindung lokal begrenzt werden, also entweder bei großen Kontaktflächen auf diskrete Bereiche oder bei Substraten mit nur wenigen oder kleinen Kontaktflächen auf diese beschränkt werden. Im letztgenannten Fall können die Substrate oder eines von ihnen auf der gesamten Oberfläche mit dem mikrowellenabosrbierenden Medium versehen sein, die dann im Mikrowellenfeld zwar aufschmilzt, sich aber wieder zurückbildet, da ein Verschweißen nur an den Kontaktflächen stattfindet.
- Die Schmelztemperatur läßt sich durch Steuerung der Mikrowellenenergie, insbesondere aber auch wegen der kurzen Einwirkungsdauer sehr exakt einhalten, so daß sich einerseits eine Verbindung optimaler Festigkeit herstellen, andererseits jede molekulare Schädigung vermeiden läßt. Die zu erschmelzende Masse kann auf das für die Herstellung der Verbindung notwendige Miminum beschränkt werden.

In einer bevorzugten Ausführung des Verfahrens ist vorgesehen, daß die Substrate im Mikrowellenfeld unter mechanischem Druck wenigstens auf ihre Kontaktflächen miteinander verschweißt werden.

Durch den mechanischen Druck wird zunächst sichergestellt, daß das mikrowellenabsorbierende Medium im Kontaktbereich der Substrate bzw. dem dort vorhandenen Spalt gleichmäßig verteilt wird, sofern ein gleichmäßiger Auftrag nicht von vornherein vorhanden ist, zum anderen werden die Substrate im schließlich aufschmelzenden Bereich der Grenzflächen zusammengedrückt, so daß die Schmelze beider Substrate ineinander fließt und es nach dem Abkühlen zu einer homogenen, festen Verbindung kommt.

Je nach Struktur des Substrates kann das mikrowellenabsorbierende Medium nur im Bereich der Kontaktflächen wenigstens eines oder auch beider Substrate vollflächig aufgetragen werden.

Eine andere Variante zeichnet sich dadurch aus, daß wenigstens ein Substrat aus einem für das mikrowellenabsorbierende Medium penetrationsfähigen Polymer besteht. In diesem Fall dringt also das mikrowellenaktive Mittel zumindest oberflächennah in das Polymer ein und entfaltet seine Wirkung im Mikrowellenfeld nicht nur an der Grenzfläche, sondern auch in der Tiefe der Oberfläche.

Das mikrowellenabsorbierende Medium können die Kontaktflächen der Polymere benetzende Flüssigkeiten, z.B. Alkohole oder Öle sein. Vorzugsweise aber enthält das Medium Ruß, der lediglich angefeuchtet ist. Hierdurch läßt sich vor allem die Schweiß- bzw. Sinterzeit auf ein Minimum reduzieren, da eine schnelle Umwandlung der Mikrowellenenergie in thermische Energie stattfindet. Ein weiterer positiver Effekt ist folgender: Aufgrund der Plättchenstruktur von Ruß einerseits und der Oberflächenspannung der Polymerschmelze andererseits sinken die Rußpartikel in die Schmelze ein, so daß sie das Verfließen der Schmelze im Bereich der Kontaktflächen nicht behindern, Fehlstellen in der Verbindung also nicht entstehen. Sind die Substrate nicht nur im Bereich der gemeinsamen, miteinander zu verbindenden Grenzflächen mit dem mikrowellenabsorbierenden Medium beschichtet, wo die Rußpartikel am fertigen Produkt ohnehin nicht stören, so verschwinden sie auch in den übrigen Bereichen unter die Oberfläche, so daß sich deren ursprüngliche Beschaffenheit und Eigenschaften nach dem Abkühlen wieder einstellen. Durch das Absinken unter die Oberfläche wandert die eigentliche Wärmequelle in die Tiefe des Substrates, so daß die Schmelz front entsprechend nach innen wandert, was für eine innige Verbindung der Substrate sorgt. Schließlich ist Ruß ein umweltfreundliches, gegebenenfalls vom Polymer auch leicht zu trennendes Material, so daß es keine zusätzliche Belastung beim Recycling der Polymere darstellt.

Die Schweiß- bzw. Sintertemperatur läßt sich, wie schon angedeutet, problemlos auf die Erweichungs- bzw. Schmelztemperatur der an der Verbindung beteiligten Polymere einstellen. Dies läßt sich dadurch erreichen, daß die Energie des Mikrowellenfeldes und/oder die Verweilzeit der Substrate im Mikrowellenfeld und/oder die Menge des mikrowellenaktiven Materials gesteuert wird.

Das Verfahren nach der Erfindung läßt sich bei Substraten unterschiedlichster Struktur ausführen. So kann wenigstens ein Substrat aus einer Folie oder aus Partikeln bestehen oder ein räumlicher Formkörper sein, der zur Gänze aus dem Polymer besteht oder lediglich mit einem solchen beschichtet ist. Insbesondere bietet das Verfahren die Möglichkeit, modale oder bimodale Substrate, also beispielsweise Granulate verschiedener Korngröße, aber auch Substrate unterschiedlicher Form, z.B. Granulate mit Folie oder Folie mit räumlichen Formkörpern oder solche Formkörper mit Granulaten, zu verbinden. Es lassen sich folglich auch Verbunde herstellen, die bisher nicht oder nur mit größtem Aufwand zu erzeugen waren. Nur beispielhaft sei erwähnt, daß beispielsweise auf einem räumlichen Formkörper, also einem beliebigen Werkstück, eine Dämpfungsschicht aus, gegebenenfalls geschäumtem, Granulat aufgebracht und dieses gegebenenfalls noch durch eine Folie abgedeckt werden kann. In diesem Fall kann es ausreichen, nur das Granulat mit dem mikrowellenabsorbierenden Medium zu beschichten, um im Mikrowellenfeld die Grenzflächen zwischen dem Granulat einerseits und dem Formkörper bzw. der Folie andererseits aufzuschmelzen.

In einer bevorzugten, aber wiederum nur beispielhaften Ausführung dient das Verfahren zur Herstellung poriger Formkörper, indem modale oder bimodale, partikelförmige Substrate, z.B. Granulate verwendet werden, wenigstens ein Teil der partikelförmigen Substrate mit dem mikrowellenabsorbierenden Medium versetzt wird und mit dem restlichen Substrat gemischt und die Mischung unter Einwirkung von mechanischem Druck dem Mikrowellenfeld ausgesetzt wird.

Auf diese Weise lassen sich Filtermaterialien, Verpackungs- oder Dämmmaterialien aus sortenreinen und damit in einfacher Weise recyclebaren Polymeren herstellen. Auch hierbei wird der oben genannte Vorteil des erfindungsgemäßen Verfahrens besonders augenfällig, indem bei kurzer Verweilzeit im Mikrowellenfeld große Volumina poriger Formkörper erzeugt werden können und in sämtlichen Volumenquerschnitten eine gleichermaßen gute Verbindung der Partikel bzw. Granulate vorhanden ist.

## Patentansprüche

1. Verfahren zum thermischen Verbinden von wenigstens zwei Substraten aus Polymeren mittels Mikrowellenenergie unter Verwendung eines mikrowellenabsorbierenden Mediums, dadurch gekennzeichnet, daß wenigstens ein Substrat zumindest an der Grenzfläche zum anderen Substrat wenigstens bereichsweise mit dem mikrowellenabsorbierenden Medium unmittelbar beschichtet wird und daß die Substrate unter Kontakt ihrer Grenzflächen in einem Mikrowellenfeld miteinander verschweißt werden.

2. Verfahren nach Anspruch 1, dadurch gekennzeichnet, daß die Substrate im Mikrowellenfeld unter mechanischem Druck wenigstens auf ihre Kontaktflächen miteinander verschweißt werden.

3. Verfahren nach Anspruch 1 oder 2, dadurch gekennzeichnet, daß das mikrowellenabsorbierende Medium auf die Kontaktflächen des Substrates vollflächig aufgebracht wird.

4. Verfahren nach einem der Ansprüche 1 bis 3, dadurch gekennzeichnet, daß wenigstens ein Substrat aus einem für das mikrowellenabsorbierende Medium penetrationsfähigen Polymer besteht.

5. Verfahren nach einem der Ansprüche 1 bis 4, dadurch gekennzeichnet, daß das mikrowellenabsorbierende Medium eine die Oberfläche des Substrates benetzende Flüssigkeit ist.

6. Verfahren nach einem der Ansprüche 1 bis 5, dadurch gekennzeichnet, daß das mikrowellenabsorbierende Medium Ruß enthält.

7. Verfahren nach Anspruch 6, dadurch gekennzeichnet, daß als mikrowellenabsorbierendes Medium mit einer Flüssigkeit versetzter Ruß verwendet wird.

8. Verfahren nach Anspruch 7, dadurch gekennzeichnet, daß der Ruß in der Flüssigkeit mit weniger als 1 Massen-% enthalten ist.

9. Verfahren nach einem der Ansprüche 1 bis 8, dadurch gekennzeichnet, daß die Temperatur an den Kontaktflächen der Substrate durch die Energie des Mikrowellenfeldes und/oder die Verweilzeit der Substrate im Mikrowellenfeld und/oder die Menge des mikrowellenabsorbierenden Mediums gesteuert wird.

10. Verfahren nach einem der Ansprüche 1 bis 9, dadurch gekennzeichnet, daß wenigstens ein Substrat eine Folie ist.

11. Verfahren nach einem der Ansprüche 1 bis 10, dadurch gekennzeichnet, daß wenigstens ein Substrat aus Partikeln besteht.

12. Verfahren nach einem der Ansprüche 1 bis 11, dadurch gekennzeichent, daß wenigstens ein Substrat ein Formkörper ist, der aus einem Polymer besteht oder mit einem solchen beschichtet ist.

13. Verfahren nach einem der Ansprüche 1 bis 12 zur Herstellung von porigen Formkörpern, dadurch gekennzeichnet, daß modale oder bimodale, partikelförmige Substrate verwendet werden, wenigstens ein Teil der partikelförmigen Substrate mit dem mikrowellenabsorbierenden Medium versetzt und dieser Teil mit dem restlichen Substrat gemischt und die Mischung unter Einwirkung von mechanischem Druck dem Mikrowellenfeld ausgesetzt wird.

14. Verfahren nach Anspruch 13 zur Herstellung von Filtermaterial aus Granulaten thermoplastischer Polymere.

15. Verfahren nach Anspruch 13 zur Herstellung von Verpackungsmaterial aus Granulaten der Polymere.

16. Verfahren nach Anspruch 13 zur Herstellung von mechanisch oder thermisch wirksamem Dämmaterial aus Polymeren.
